# EUROPEAN PATENT APPLICATION

(11) **EP 4 582 766 A1**
(43) Date of publication of application: **09.07.2025**
(21) Application number: 23860063.9
(22) Date of filing: 17.08.2023
(51) Int. Cl.: G01B 5/02, F15B 15/10

(54) **ACTUATOR CURVED INNER LENGTH MEASUREMENT DEVICE AND ACTUATOR CURVED INNER LENGTH MEASUREMENT METHOD**

(30) Priority: 02.09.2022 JP 2022140034
(71) Applicant: BRIDGESTONE CORPORATION, Chuo-ku Tokyo 104-8340 (JP); The University of Tokyo, Bunkyo-ku, Tokyo 113-8654 (JP)
(72) Inventor: OONO, Shingo, Tokyo 104-8340 (JP); MIYAZAKI, Tetsuro, Tokyo 113-8654 (JP); KAWASHIMA, Kenji, Tokyo 113-8654 (JP); KUTSUNA, Kaito, Tokyo 113-8654 (JP)
(74) Representative: Marks & Clerk LLP
(86) International application number: PCT/JP2023/029706
(87) International publication number: WO 2024/048299

(57) **Abstract**

There is provided an actuator curved inner length measurement apparatus for a fluid pressure actuator that includes a tubular actuator main body portion having a tube circumference of which one side is shortened and curved due to increase in internal pressure in a tube and that has a proximal end side along a tube axis which is fixed to a base body and has a distal end which moves relative to the base body, the actuator curved inner length measurement apparatus including: a wire member having one end side attached to the base body and a middle portion disposed on a curved side of the actuator main body portion 22 to conform to curved deformation; a wire holding member that holds the wire member at a position along the actuator main body portion; and a measurement unit that applies tension to the wire member and measures a length change amount of the wire member.

## Description

### Technical Field

The present invention relates to an actuator curved inner length measurement apparatus and a method for measuring an actuator curved inner length for a fluid pressure actuator.

### Background Art

Conventionally, as fluid pressure actuators, McKibben types of fluid pressure actuators including a rubber tube and a sleeve (obtained by interweaving high-tension fibers) that covers an outer surface of the rubber tube are known. Such McKibben types of fluid pressure actuators can change a length parallel to an axial direction of the rubber tube and the sleeve.

A technology is proposed in which a restraint member is provided in a part of the rubber tube in a circumferential direction thereof from one end side to the other end side of the rubber tube in the axial direction, so that a side of the fluid pressure actuator on which the restraint member is not provided is shortened and curved and deformed (see Japanese Patent Application Laid-open (JP-A) No. 2021-88999).

### SUMMARY OF INVENTION

### Technical Problem

JP-A No. 2021-88999 proposes that a plurality of such fluid pressure actuators be combined and used as fingers that grip an object through curved deformation. In this case, it is necessary to obtain a length on a curved inner side in a relationship with a force for gripping an object with the fluid pressure actuators.

In view of the fact described above, an object of the present disclosure is to provide an actuator curved inner length measurement apparatus and a method for measuring an actuator curved inner length which enable a length on a curved inner side of a fluid pressure actuator to be easily obtained.

### Solution to Problem

In order to achieve the above-described object, there is provided an actuator curved inner length measurement apparatus of a first aspect for a fluid pressure actuator that includes a tubular main body portion having a tube wall of which one side is shortened in a tube axis direction and curved due to an increase in internal pressure in a tube and that has a proximal end side along a tube axis which is fixed to a base body and has a distal end which moves relative to the base body, the actuator curved inner length measurement apparatus including: a wire member having one end side attached to the base body and a middle portion disposed at a curved side of the main body portion to conform to curved deformation; a wire holding member that holds the wire member at a position along the main body portion; and a measurement unit that applies tension to the wire member and measures a length change amount of the wire member.

In the actuator curved inner length measurement apparatus of the first aspect, the middle portion of the wire member is disposed on the curved side of the main body portion of the fluid pressure actuator and conforms to the curved deformation. The measurement unit measures the length change amount of the wire member, thereby enabling the length of the fluid pressure actuator on a curved inner side to be easily measured even in a curved state.

In the actuator curved inner length measurement apparatus of a second aspect, another end side of the wire member is fixed further to a distal end side of the fluid pressure actuator than the main body portion.

As described above, the other end side of the wire member is fixed further to the distal end side of the fluid pressure actuator than the main body portion, whereby the shortening of the main body portion is not hindered. Since the wire member can be disposed from one end to the other end of the main body portion, a length of the fluid pressure actuator on the curved inner side can be measured with accuracy.

In the actuator curved inner length measurement apparatus of a third aspect, the wire holding member is made of a flexible tube that is disposed along a curved side of the main body portion and in the tube axis direction and into which the wire member is inserted.

As described above, the wire holding member is made of the flexible tube which is disposed along the curved side of the main body portion and in the tube axis direction, whereby the wire member is inserted into the wire holding member so that the wire member can be disposed along the curved side of the main body portion.

In the actuator curved inner length measurement apparatus of a fourth aspect, one end of the flexible tube is fixed to the base body, and another end is fixed further to a distal end side of the fluid pressure actuator than the main body portion.

As described above, the one end of the flexible tube is fixed to the base body, and the other end is fixed further to the distal end side of the fluid pressure actuator than the main body portion, whereby the shortening of the main body portion is not hindered at a fixing position.

In the actuator curved inner length measurement apparatus of a fifth aspect, the measurement unit includes a rotary encoder that detects a winding length while the wire member is wound.

As described above, an extension length of the wire member from the base body can be easily measured using the rotary encoder.

There is provided a method for measuring an actuator curved inner length of a sixth aspect for a fluid pressure actuator that includes a tubular main body portion having a tube circumference of which one side is shortened and curved due to an increase in internal pressure in a tube and that has a proximal end side of a tube axis which is fixed to a base body and has a distal end which moves relative to the base body, the method including: holding a wire member at a position along the main body portion, the wire member having one end side attached to the base body and a middle portion disposed along a curved side of the main body portion and a tube axis direction; and applying tension to the wire member and measuring a length change amount of the wire member.

In the method for measuring an actuator curved inner length of the sixth aspect, the middle portion of the wire member is disposed on the curved side of the main body portion of the fluid pressure actuator and conforms to the curved deformation. Hence, the length of the fluid pressure actuator on the curved inner side can be easily measured even in a curved state by measuring the length change amount of the wire member.

### Advantageous Effects of Invention

According to the disclosure, it is possible to easily obtain a length of a fluid pressure actuator on a curved inner side.

### BRIEF DESCRIPTION OF DRAWINGS

Fig. 1 is a side view of a fluid pressure actuator as a measurement target of an actuator curved inner length measurement apparatus according to the present embodiment.
Fig. 2 is a partially exploded perspective view of a fluid pressure actuator.
Fig. 3 is a cross-sectional view of the fluid pressure actuator.
Fig. 4 is a diagram illustrating a state (non-curved state) in which the fluid pressure actuator is attached to the actuator curved inner length measurement apparatus.
Fig. 5 is a diagram illustrating a state (curved state) in which the fluid pressure actuator is attached to the actuator curved inner length measurement apparatus.

### DESCRIPTION OF EMBODIMENTS

Hereinafter, embodiments that realize a technology of the disclosure will be described in detail with reference to the drawings.

Configurational elements and processes having the same effects and functions are denoted by the same reference numerals throughout the drawings, and redundant descriptions thereof may be omitted as appropriate. The disclosure is not limited to the following embodiments and can be implemented with appropriate modifications within the scope of the object of the disclosure.

### <Configurations of Fluid Pressure Actuator>

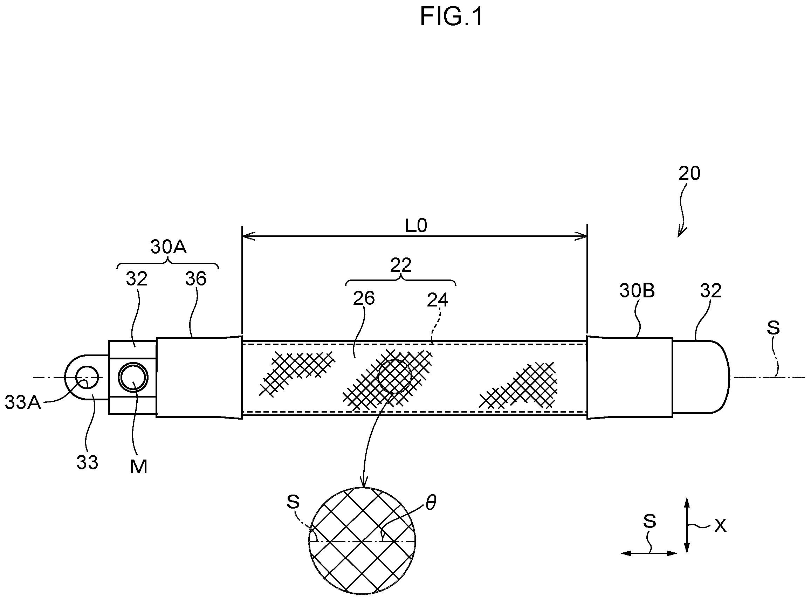

Fig. 1 illustrates a fluid pressure actuator 20 as a measurement target of an actuator curved inner length measurement apparatus 10 of the disclosure. The fluid pressure actuator 20 includes an actuator main body portion 22 and sealing members 30A and 30B.

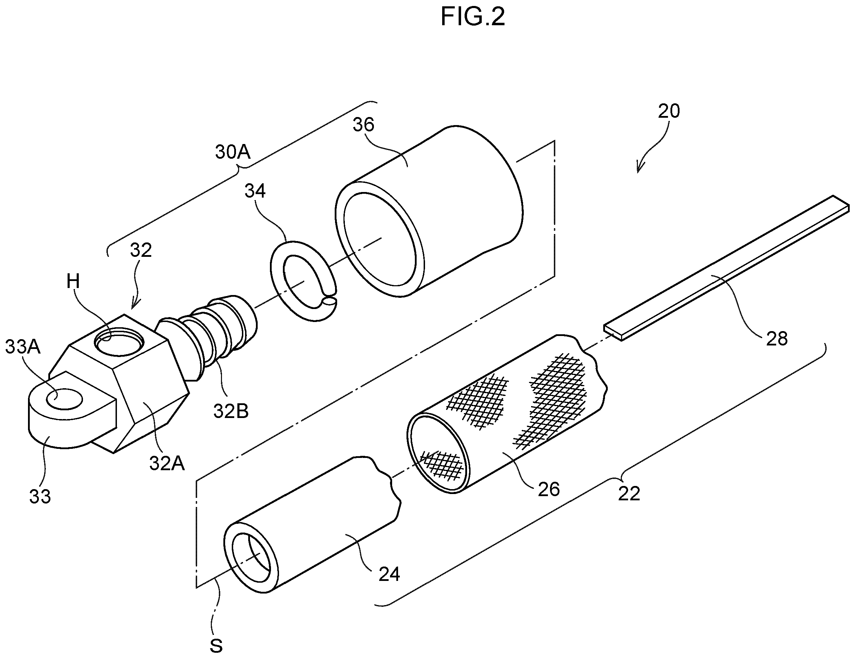

As also illustrated in Fig. 2, the actuator main body portion 22 includes a tube 24, a sleeve 26, and a restraint member 28. The tube 24 has an expandable cylindrical shape due to elastic deformation and expands and contracts due to a pressure change of an internal fluid. An axial direction of the tube 24 is referred to as an "axial direction S". The tube 24 can be made of an elastic material such as butyl rubber. Air can be used as a fluid to be supplied to the tube 24, and in this case, the fluid pressure actuator 20 is a pneumatic actuator. In a case where the fluid pressure actuator 20 is hydraulically driven, it is preferable that the tube be made of at least one selected from the group consisting of nitrile rubber (NBR) having high oil resistance, hydrogenated NBR, chloroprene rubber, and epichlorohydrin rubber.

The sleeve 26 has a cylindrical shape that covers the outer circumference of the tube 24. The sleeve 26 is an elastic structure in which fiber cords oriented in a predetermined direction are interwoven, and the oriented cords intersect the axial direction S at a predetermined angle θ. The sleeve 26 has such a shape, thereby being deformed as in a pantograph in which the angle θ changes, and conforming to contraction and expansion of the tube 24 while restricting the contraction and the expansion.

As the cord constituting the sleeve 26, an aromatic polyamide (aramid fiber) cord or a polyethylene terephthalate (PET) fiber cord is preferably used. However, the fiber cords are not limited to such types of fiber cords, and cords made of other high-strength fibers such as polyparaphenylene benzobisoxazole (PBO) fibers may be used.

The restraint member 28 is provided between the tube 24 and the sleeve 26. The restraint member 28 has an elongated plate shape, is disposed in a direction in which a longitudinal direction thereof is parallel to the axial direction of the tube 24, covers a part of the outer circumference of the tube 24, and is disposed from one end to the other end of the tube 24.

The restraint member 28 is made of a material that does not expand/contract by pressurization and is bendable and deformable in a direction in which end portions thereof approach each other. As the restraint member 28, a so-called leaf spring can be used. A dimension of the leaf spring is determined depending on a size of the fluid pressure actuator 20, a required gripping force, or the like. The material of the leaf spring is not particularly limited, and generally, any compression-resistant material that is easily bent and deformed, such as metal such as stainless steel, may be used. Alternatively, the leaf spring may be formed of a carbon fiber reinforced plastic (CFRP) thin plate or the like.

The sealing member 30A includes a sealing connector 32, a locking ring 34, and a caulking member 36.

The sealing connector 32 has a lid portion 32A and an insertion portion 32B which are integrally molded. The lid portion 32A has a hexagonal column shape with a diameter larger than an outer diameter of the tube 24, and the insertion portion 32B is formed to extend in the axial direction S from a center of the lid portion 32A on one end side. The insertion portion 32B has a so-called bamboo shoot shape and is inserted into one end side of the tube 24 inside the sleeve 26. An attachment portion 33 is formed on a side of the lid portion 32A opposite to the insertion portion 32B. The attachment portion 33 has an attachment hole 33A penetrating the attachment portion 33 in a direction orthogonal to the axial direction S. The sealing member 30A can be suitably made of a metal such as stainless steel, but the material thereof is not limited to such a metal, and a rigid plastic material or the like may be used.

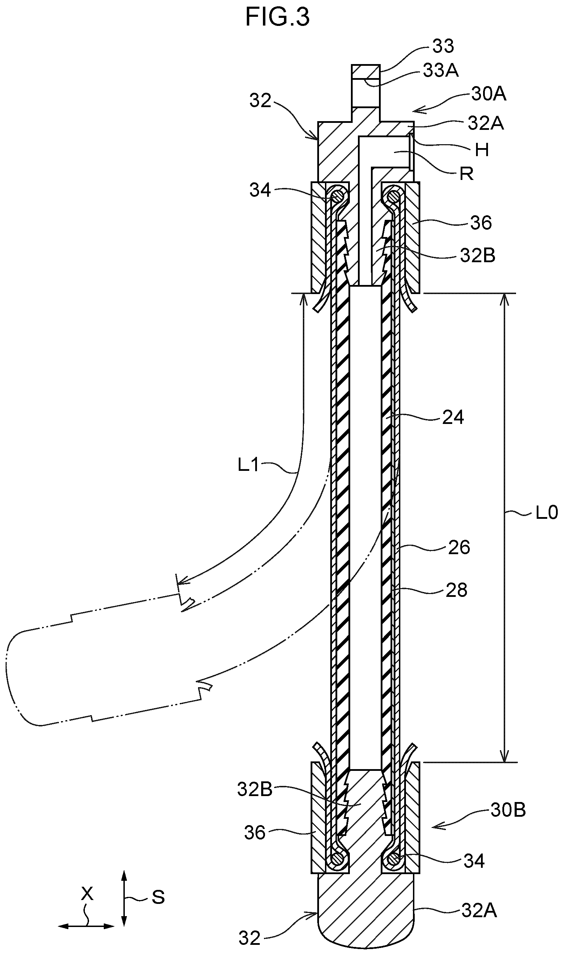

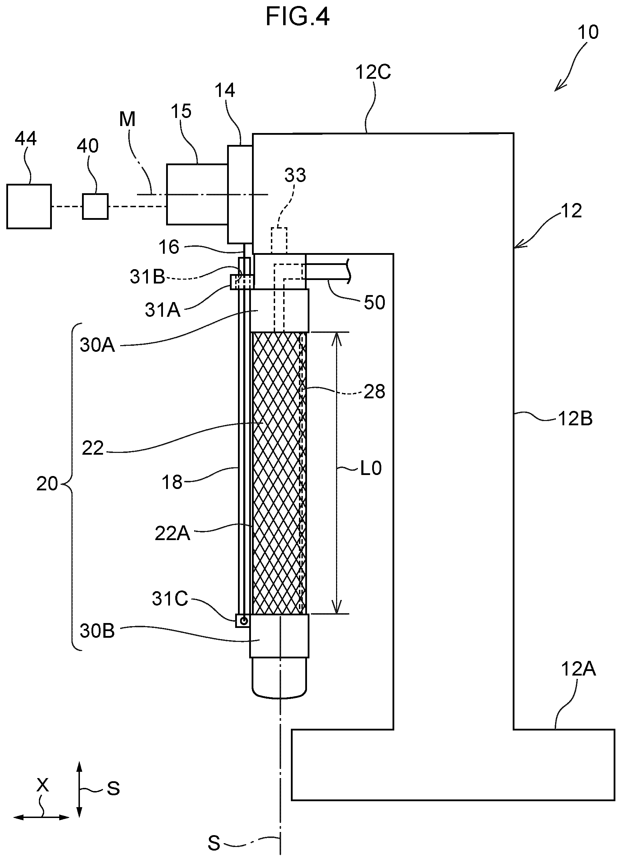

As illustrated in Fig. 3, the sealing connector 32 has a flow channel R. The flow channel R is formed to extend in the axial direction at a radial central portion of the insertion portion 32B and communicates with a connection hole H in a side surface of the lid portion 32A. An air supply hose 50 (see Fig. 4) is connected to the connection hole H, and compressed air is supplied to the connection hole H.

The locking ring 34 has a ring shape, is disposed on the outer side of the sleeve 26 so that the sleeve 26 is interposed between the insertion portion 32B and the locking ring 34, and locks the sleeve 26 to the sealing connector 32. The sleeve 26 is folded back to an outer circumference via the locking ring 34. The locking ring 34 can be made of a material such as metal, hard plastic, fiber, or rubber.

The caulking member 36 is disposed to cover a portion of the outer circumference of the actuator main body 22 into which the insertion portion 32B is inserted, and is caulked with the actuator main body 22 on the sealing connector 32. Consequently, the actuator main body portion 22 is fixed to the sealing connector 32. The caulking member 36 can be made of metal such as an aluminum alloy, brass, and iron.

Similarly to the sealing member 30A, the sealing member 30B includes a sealing connector 32, a locking ring 34, and a caulking member 36. However, in the sealing connector 32, the connection hole H and the flow channel R are not formed, and a distal end thereof has an R shape.

### <Operations of Fluid Pressure Actuator>

As illustrated in Fig. 4, the fluid pressure actuator 20 is used such that the sealing member 30A on one end side is fixed and the sealing member 30B on the other end side is a free end.

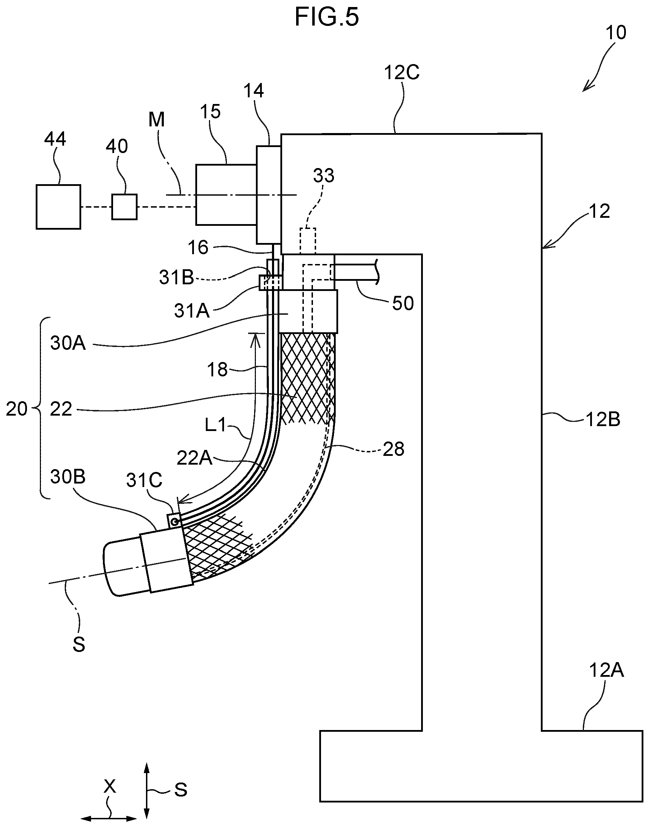

When compressed air flows in from the connection hole H through the air supply hose 50, a pressure in the fluid pressure actuator 20 increases. Due to the increase in the internal pressure, the tube 24 is elastically deformed and expanded, the sleeve 26 is deformed so that the angle θ increases, and a force acts in a direction in which a length L0 (a length when the actuator main body portion is not shortened) of the actuator main body portion 22 is shortened. At this time, since an outer circumferential side wall of the actuator main body portion 22 on which the restraint member 28 is disposed is restricted from being shortened, an outer circumferential wall (hereinafter referred to as a "curved inner wall 22A") of the actuator main body portion 22 on a side on which the restraint member 28 is not disposed is shortened as viewed in the axial direction S. Consequently, the restraint member 28 is bent and deformed, and the entire actuator main body portion 22 is curved as illustrated in Fig. 5.

As described above, when the actuator main body portion 22 is curved, a force applied by the sealing member 30B in a direction (hereinafter referred to as an "orthogonal-to-axis direction X") orthogonal to the axial direction S is defined as a gripping force F.

### <Actuator Curved Inner Length Measurement Apparatus>

As illustrated in Fig. 4, the actuator curved inner length measurement apparatus 10 includes a base body 12, a wire winding portion 14, a measurement unit 15, a wire member 16, a wire holding member 18, a counter board 40, and a controller 44.

The base body 12 includes a seat portion 12A, a column portion 12B extending upward from the seat portion 12A, and a support portion 12C projecting in a horizontal direction from an upper end of the column portion 12B. The sealing member 30A of the fluid pressure actuator 20 is fixed to a lower surface of the support portion 12C via the attachment portion 33. The air supply hose 50 is connected to the connection hole H of the sealing member 30A.

The wire winding portion 14 is provided in a support portion 12C and is rotatable around a winding axis M. The wire winding portion 14 applies a biasing force to wind the other end side of the wire member 16 so that the wire member 16 is not loosened. The biasing force is set to be smaller than a restoring force by which the pressure in the fluid pressure actuator 20 returns to the atmospheric pressure and the fluid pressure actuator returns to a linear state from a curved state.

The other end side of the wire member 16 is fixed by a fixture 31C at a position (on the curved inner wall 22A side) facing the restraint member 28 on an outer circumference of the sealing member 30B. One end side of the wire member 16 is attached to the wire winding portion 14. The wire member 16 is made of a long wire material that can be wound, and a string such as a metallic cord or a fiber can be used. The wire member 16 is inserted into the wire holding member 18 from the other end side of the wire member to a portion in front of the wire member having been wound by the wire winding portion 14.

The wire holding member 18 has a tube shape (tubular shape) and is disposed at a position (on the curved inner wall 22A side) facing the restraint member 28 on the outer circumference of the sealing member 30B. The wire holding member 18 has a length (longer than the actuator main body portion 22) that covers from one end to the other end of the actuator main body portion 22 in an uncompressed state. The wire holding member 18 is disposed parallel to the axial direction S. As the wire holding member 18, a flexible tube can be used. A distal end of the wire holding member 18 is fixed to the fixture portion 31C.

The sealing member 30A has a lock portion 31A formed at a position corresponding to the curved inner wall 22A side in a circumferential direction. The lock portion 31A has a hole 31B open in the axial direction S into which the wire holding member 18 can be inserted, and the wire member 16 is inserted into the hole 31B. The lock portion 31 allows assumed movement of the wire holding member 18 in the axial direction S and restricts the wire holding member 18 from being moved in the circumferential direction and a radial direction with respect to the sealing member 30A. The relative movement of the wire holding member 18 and the sealing member 30A with respect to each other is allowed in the axial direction S. Consequently, the wire holding member 18 is provided over the actuator main body portion from one end to the other end, is disposed along the curved inner wall 22A of the actuator main body portion 22, and conforms to the movement of the actuator main body portion 22.

The measurement unit 15 is configured of a rotary encoder that detects a signal depending on the rotation of the wire winding portion 14 around the winding axis M, and transmits a detection signal to the counter board 40. The counter board 40 counts signals transmitted from the measurement unit 15 and obtains a winding length LR of the wire member 16.

Here, operations of the fluid pressure actuator 20 and the length L1 of the curved inner wall 22A are described. The length L1 of the curved inner wall 22A is a length L0 when the fluid pressure actuator 20 is in a non-curved state, and the length is shortened as the pressure in the fluid pressure actuator 20 increases. The wire member 16 disposed along the curved inner wall 22A is wound by the wire winding portion 14 so as not to be loosened by the shortening. The other end side of the wire member 16 is fixed to the curved inner wall 22A side of a distal end (the sealing member 30B) of the fluid pressure actuator 20, and the one end side thereof is attached to the wire winding portion 14. Hence, an extension length of the wire member 16 from the wire winding portion 14 can be measured depending on the winding rotation of the wire member 16 by the wire winding portion 14.

Since the wire member 16 is inserted through the wire holding member 18 and is disposed along the curved inner wall 22A of the actuator main body portion 22, the winding length LR which is the length change amount of the wire member 16 and a shortened length of the actuator main body portion 22 are substantially the same. The length L1 of the curved inner wall 22A is a length obtained by subtracting the winding length LR of the wire member 16 from the length L0 when the actuator main body portion 22 is in the non-curved state. The length L1 of the curved inner wall 22A can be calculated by subtracting the length LR from the length L0.

The winding length LR output from the counter board 40 is processed by the controller 44, and the length L1 can be obtained by subtracting the length LR from the length L0 stored in advance. The controller 44 includes a CPU, a ROM, a RAM, an input/output interface (I/O), a storage unit, and the like (not illustrated), and outputs the obtained length L1 in response to a request. The output may be a display on a display unit or an output for feedback for the next processing.

In the actuator curved inner length measurement apparatus 10 according to the present embodiment, the wire holding member 18 disposes the wire member 16 to conform to the curved deformation of the curved inner wall 22A of the actuator main body portion 22 of the fluid pressure actuator 20. Hence, the length of the fluid pressure actuator 20 on the curved inner side can be easily measured even in the curved state by measuring the length LR that is the length change amount of the wire member 16.

In the present embodiment, the other end side of the wire member 16 is fixed to the distal end side of the curved inner wall 22A from the actuator main body portion 22, but may be disposed at the middle portion of the actuator main body portion 22 with another member interposed therebetween so that the actuator main body portion 22 is curved without hindrance. In this case, a relationship between the winding length LR and the length L1 of the wire member 16 is measured in advance, and a correspondence table or the like can be created so that the length L1 can be obtained.

In the present embodiment, the wire member 16 is disposed along the curved inner wall 22A of the actuator main body portion 22, but may be disposed along a shortened position on the outer circumference of the actuator main body portion 22. Also in this case, the relationship between the winding length LR and the length L1 of the wire member 16 is measured in advance, and a correspondence table or the like can be created so that the length L 1 can be obtained.

The entire disclosure of Japanese Patent Application No. 2022-140034 filed on September 2, 2022 is incorporated herein by reference.

All of the literature, patent applications, and technical standards described in this specification are incorporated herein by reference to the same extent that individual literature, patent applications, and technical standards were specifically and individually described to be incorporated herein by reference.

## Claims

1. An actuator curved inner length measurement apparatus for a fluid pressure actuator that includes a tubular main body portion having a tube wall of which one side is shortened in a tube axis direction and curved due to an increase in internal pressure in a tube, and that has a proximal end side along a tube axis which is fixed to a base body and has a distal end which moves relative to the base body, the actuator curved inner length measurement apparatus comprising:
a wire member having one end side attached to the base body and a middle portion disposed at a curved side of the main body portion to conform to curved deformation;
a wire holding member that holds the wire member at a position along the main body portion; and
a measurement unit that applies tension to the wire member and measures a length change amount of the wire member.

2. The actuator curved inner length measurement apparatus according to claim 1, wherein another end side of the wire member is fixed further to a distal end side of the fluid pressure actuator than the main body portion.

3. The actuator curved inner length measurement apparatus according to claim 1, wherein the wire holding member is made of a flexible tube that is disposed along a curved side of the main body portion and in the tube axis direction and into which the wire member is inserted.

4. The actuator curved inner length measurement apparatus according to claim 3, wherein one end of the flexible tube is fixed to the base body, and another end is fixed further to a distal end side of the fluid pressure actuator than the main body portion.

5. The actuator curved inner length measurement apparatus according to any one of claims 1 to 4, wherein the measurement unit includes a rotary encoder that detects a winding length while the wire member is wound.

6. A method for measuring an actuator curved inner length for a fluid pressure actuator that includes a tubular main body portion having a tube circumference of which one side is shortened and curved due to an increase in internal pressure in a tube, and that has a proximal end side of a tube axis which is fixed to a base body and has a distal end which moves relative to the base body, the method comprising:
holding a wire member at a position along the main body portion, the wire member having one end side attached to the base body and a middle portion disposed along a curved side of the main body portion and a tube axis direction; and
applying tension to the wire member and measuring a length change amount of the wire member.
